Europäisches Patentamt

European Patent Office

Office européen des brevets

(11) Publication number: **0 114 985**
**B1**

(12) **EUROPEAN PATENT SPECIFICATION**

(45) Date of publication of patent specification: **28.10.87**

(21) Application number: **83112246.0**

(22) Date of filing: **06.12.83**

(51) Int. Cl.⁴: **G 06 F 13/40, H 04 B 9/00**

(54) **System for interfacing remote functional units to a terminal unit.**

(30) Priority: **06.01.83 US 456071**

(43) Date of publication of application:
**08.08.84 Bulletin 84/32**

(45) Publication of the grant of the patent:
**28.10.87 Bulletin 87/44**

(84) Designated Contracting States:
**DE FR GB**

(56) References cited:
**EP-A-0 033 445**
**EP-A-0 033 631**
**EP-A-0 108 989**
**US-A-4 176 401**

(73) Proprietor: **International Business Machines
Corporation
Old Orchard Road
Armonk, N.Y. 10504 (US)**

(72) Inventor: **Harbour, Edward Earl
1909 Talloway Dr.
Cary, NC 27511 (US)**
Inventor: **Lynch, Robert Carlton
302 E. Maynard Rd.
Cary, NC 27511 (US)**
Inventor: **Stilwell, George Raymond, Jr.
11900 Coachman's Way
Raleigh, NC 27614 (US)**

(74) Representative: **Savi, Camillo
IBM Italia S.p.A. Direzione Brevetti MI-SEG-555
P.O.Box 137
I-20090 Segrate (Milano) (IT)**

Courier Press, Leamington Spa, England.

## Description

The present invention relates to a circuit interfacing one or more remote functional units to a terminal unit utilizing a closed chamber as an inter-unit optical communications link.

Any data processing terminal device, ranging from a simple calculator to a complex point-of-sale terminal, can be viewed as a combination of functional units (controllers, printers, displays, etc.), each of which has a dedicated function to perform as well as a need to exchange data and control signals with at least some of the other functional units.

Conventionally, the functional units have been linked through electrical wires, usually in the form of electrical cables. Cables have known disadvantages. Cables usually represent a significant portion of the component cost of a terminal device. The time and labor required to assemble terminal devices with electrical cables are also normally significant. Moreover, electrical cables are susceptible to electric noise or stray signals which can produce errors in the data or control signals being transmitted between functional units.

To avoid some of these problems, proposals have been made that optical fibers be used to provide communications links between the functional units. Optical fibers are less susceptible to noise or stray signals than electrical cables, but cost more and are harder to work with during terminal assembly operations.

To overcome some of the known problems of electrical or optical cables, US—A—4 063 083 discloses a system having between functional units an optical link in which a single beam of optical energy is transmitted along a straight path within a closed chamber from one pluggable card to the next. At each card the optical energy may be detected, modified and retransmitted to the next card along the path. Lenses are included for maintaining the beam focus.

While the approach disclosed in the above mentioned patent avoids some of the problems inherent in the use of electrical or optical cables, certain other problems seem to be created. In fact, the terminal device would have to be carefully assembled to maintain the proper beam alignment. Also, the arrangement is somewhat inflexible in that the cards must be arranged in series along the beam path.

The straightforward approach to interfacing remote functional units to the remainder of a closed chamber communications terminal would be to provide complete, self-contained interface circuits for all of the remote functional units. That is, each interface circuit would include both an optical emitter and an optical detector in communication with the optical chamber.

There are, however, drawbacks to this straightforward approach. The cost of having complete, self-contained interface circuits for all remote units would be high. Moreover, it would very likely be difficult to physically locate all of the necessary interface circuits in the optical chamber in locations in which optical signals could be received at suitable levels and in which one unit would not "shade" or partially block signal paths to one or more other remote functional units.

Other approaches to interfacing remote functional units have been proposed.

EP—A—0 033 445 discloses an interface for communication between an optical bus system and an electrical bus system. The optical system includes an optical chamber having light emitters and light detectors interfacing to the chamber. A CPU, a memory and other devices are connected to the electrical bus. Serializer/Deserializer, Address Decoder, Clock, and Bus Switching units control the flow of electrical data from the electrical bus to the light emitters and from the light detectors to the electrical bus.

EP—A—0 108 989, which is cited in accordance with Article 54(3) EPC, discloses a hybrid coupler for optical transmission of information between a plurality of subscribers. In the coupler, electrical signals from optical detectors positioned at the receiving end of optical signal transmitting cables are distributed in parallel through electrical wires and amplifiers to optical emitters providing optical signals to the transmitting end of optical signal transmitting cables.

US—A—4 176 401 discloses an interface for the stations of a closed loop data system. An interface includes an input line from the previous station in the loop, an output line to the next station in the loop and input and output lines to the station associated with the interface. Photo-couplers in the interface include a light emitting diode and a phototransistor, the electrical output of two photo-couplers being connected in parallel across the output line to the next station. One of these photo-couplers is connected to the output of the station associated with the interface and inhibits signals from the other photo-coupler, connected to the input line from the previous station, to be sent to the next station while the station associated with the interface is transmitting.

The invention relates to an improved circuit interfacing one or more functional units to a terminal unit which also has one or more integrated functional units which communicate optically by means of signals propagated through an optical closed chamber.

The interface circuit of the invention as claimed uses relatively few components and requires relatively little space within the optical chamber in order to perform its intended function.

One way of carrying out the invention is described in detail hereinafter with reference to drawings, in which:

Figure 1 is an exploded, perspective view of a terminal unit in which the present invention could be practiced;

Figure 2 is a simplified, rear perspective of such a terminal unit showing some of the details of the interface circuit's physical structure;

Figure 3 is a schematic diagram of one embodiment of the signal distributing circuit;

Figure 4 is a schematic diagram of the distributor or emitter section of the interface circuit; and

Figure 5 is a schematic diagram of a concentrator of signals.

The present invention pertains to a circuit for providing an interface between remote functional units and a terminal unit. A remote functional unit is considered to be any unit which is connected to the terminal unit through a signal-carrying cable. Displays, bar code scanners, produce scales, etc., are examples of typical remote functional units for a terminal unit used in a supermarket/retail store environment.

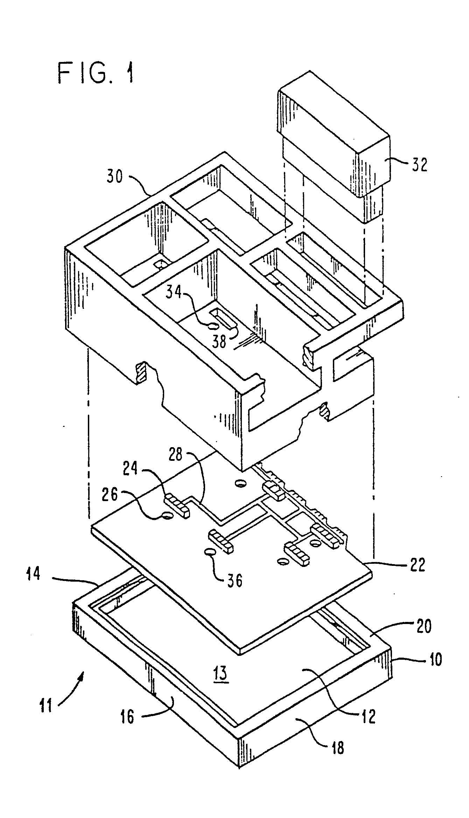

With reference to Figure 1, the terminal unit 11 includes a base 10 with solid floor 12 and vertical sidewalls 14, 16, 18 and 20. A power distribution board 22 rests on the sidewalls of the base 10. The four sidewalls and floor of base 10, together with the bottom surface of power distribution board 22 define a closed optical chamber 13 which serves as the distribution medium for optical data and control signals. Details as to the manner in which the signals are distributed through the optical chamber are provided later.

The power distribution board 22 includes a plurality of power connectors, such as connector 24, and a plurality of optically transparent ports, such as opening 26. The connectors 24 are linked through a pattern of conductors 28 which distribute AC or DC voltages generated by a power supply (not shown). The power distribution board 22 also carries the components required to interface remote units to the terminal unit 11. A more complete description of these components is provided below.

A frame 30 overlies the power distribution board 22 and rests directly on the base 10. Frame 30 includes a number of rectangular openings or bays for receiving largely self-contained terminal functional units, such as terminal functional units 32. Each terminal functional unit which is plugged into one of the bays in frame 30 includes an optical transducer. The transducer includes a light emitting device which can inject optical energy directly into the optical chamber 13 through aligned openings in the power distribution board 22 and the frame 30. Openings 34 and 36 are examples of these aligned openings. Each terminal functional unit also includes a power connector which can be mated to one of the power connectors on power distribution board 22 through a rectangular opening in the floor of frame 30. Opening 38 is an example of such a rectangular opening.

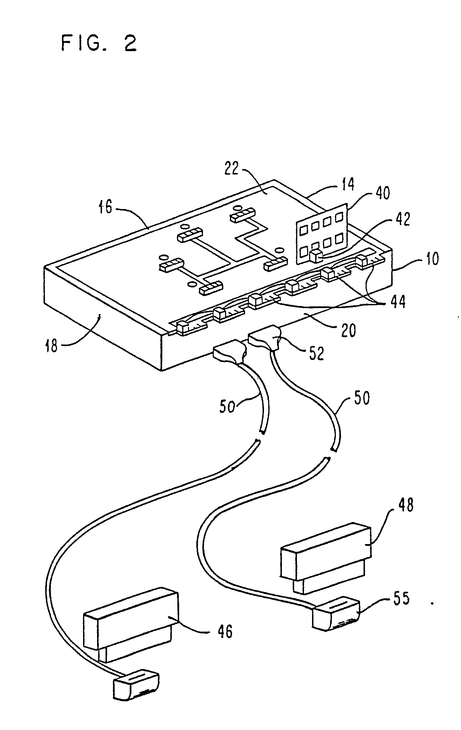

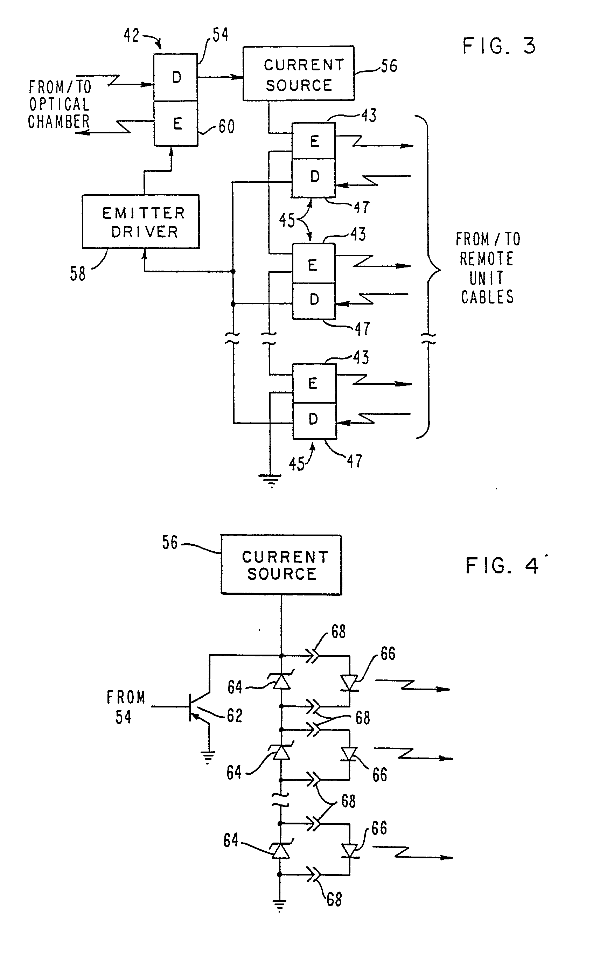

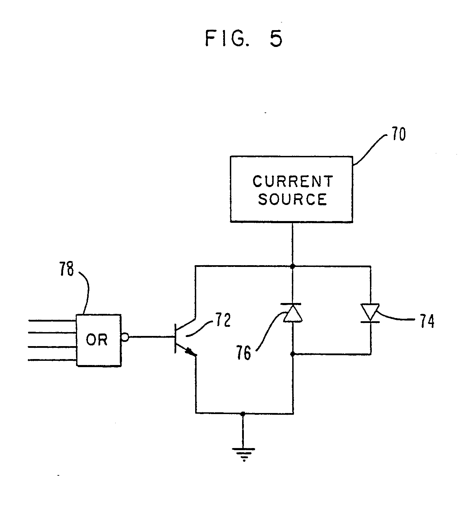

Figure 2 is a rear perspective view including the base 10 and the power distribution board 22. The interface circuit includes a circuit card 40 which includes a primary electrooptical transducer 42. The transducer 42 includes an optical detector 54 (Figure 3) which responds to optical energy being propagated through the closed optical chamber 13 to generate an electrical signal which is representative of said optical energy. This electrical signal is distributed via a signal distributing circuit to each of several connectors 44 on the power distribution board 22. More details about the nature of this connection are provided later. The primary transducer 42 also includes a light emitting device 60 (Figure 3) capable of injecting optical energy into the optical chamber. In a preferred embodiment, the light emitting device 60 in primary transducer 42 is driven by a single signal which is a logical OR of the signals received from all of the remote functional units (Figure 5).

For purposes of illustration, only two remote functional units 46 and 48, are shown in Figure 2. The number of remote functional units which could be accommodated is limited only by the number of the connectors 44 available on the rear edge of the power distribution board 22. Each remote functional unit (for example functional unit 48) is connected to the terminal unit through a signal carrying cable 50 having suitable connectors 52, 55 at each end. Preferably, each of the remote functional units 46 and 48 has an optical/physical interface which allows that unit either to be plugged directly into the power distribution board 22 within the frame 30 (Figure 1) or into the terminating connector 55 at one end of a signal-carrying cable 50. The use of such a standardized interface allows a functional unit to be used either as an integral component of the terminal unit or as a remotely located component.

Figure 3 is a schematic diagram of a preferred form of the signal distributing circuit between the optical chamber 13 and the remote functional units, such as units 46, 48. The primary optical transducer 42 mounted on circuit card 40 (Figure 2) includes a single light detector 54 which detects optical energy being propagated through the optical chamber 13. The output of the light detector 54 modulates the current provided by a current source 56 to provide an electrical signal representative of the optical signal in the chamber 13. The modulated electrical signal is used to drive a plurality of emitters 43 associated with different secondary transducers 45 at the connector areas 44. The same signal is applied or broadcast to all of the emitters 43 of the secondary transducers 45 without regard to the identity of the remote functional unit for whom the signal is ultimately intended. Each of these emitters 43 supplies the same signal to its associated remote functional unit through the associated signal carrying cable 50.

The signal carrying cables 50 are fiber optic cables which transmit the optical signals generated by the associated light emitter 43.

Each of the secondary transducers 45 also includes a detector element 47 capable of detecting signals received from the associated remote functional unit. In the preferred embodiment, the detector 47 is responsive to optical signals transmitted through the associated signal-carrying cable 50. The output of each of the detectors 47 is logically ORed at an input to an emitted driver circuit 58 which drives the single light emitter 60 of the primary transducer 42. The detectors 47 in the secondary transducers 45 and the emitter driver circuit 58 perform a concentrating function so that the primary transducer 42 is driven by a single signal regardless of the number of remote functional units which are attached to the terminal. Thus, all remote functional units interface with the optical chamber 13 through a single primary transducer 42.

Figure 3 indicates that modulated current provided by current source 56 is supplied to each of the secondary transducer emitters 43 in series. Figure 4 shows a preferred form of this circuit. The output of light detector 54 controls a shunt transistor 62 which is connected in parallel with the series of secondary transducer emitters 43. Each secondary transducer emitter 4 include a Zener diode 64 shunting a light emitting diode 66. The light emitting diode 66 in each such circuit may be connected permanently in parallel with the associated Zener diode 64. There are, however, advantages to having the light emitting diode 66 provided as an integral part of the connector 52 at the terminal end of the signal-carrying cable 50. The possible physical incorporation of the light emitting diode 66 into the cable/connector structure is represented by the symbols 68.

In an arrangement of the type described in Figure 4, the voltage drop across a light emitting diode 66 is normally small enough to allow the associated Zener diode 64 to appear as an open circuit. If, however, a light emitting diode 66 fails in an open circuit mode or is removed, for example by unplugging the cable, full voltage provided by source 56 will be imposed across the associated Zener diode 64, causing the Zener diode to break down and supply the full current to the remaining light emitting diodes 66 in the series circuit. Thus, the removal or failure of one of the light emitting diodes 66 does not affect the remaining light emitting diodes in series therewith.

Shunt transistor 62 acts as a simple signal modulator for the current provided by source 56. If the signal supplied by light detector 54 to the base of shunt transistor 62 is high enough, the transistor switches into a conductive state and current provided by source 56 is diverted directly to ground; in this case the light emitting diodes 66 would be shut off. If the detector signal is low, shunt transistor 62 is non-conductive and current supplied by source 56 flows along the series current path through each of the light emitting diodes 66. The combination of the current source 56, the transistor 62 and the individual light emitting diode 66 provides a broadcast function; that is, a single signal detected in the optical chamber is broadcast to all attached remote functional units.

Figure 5 is one embodiment of circuitry capable of concentrating signals received from the functional units. This concentrator circuitry includes a current source 70 and one (or more) switching transistor 72 connected in parallel with a light emitting diode 74 and a carrier-dissipating diode 76. The base drive signal for the transistor 72 is provided by an OR-NOT gate 78 having multiple inputs from the detectors 47 receiving signals from the remote functional units. If any functional unit provides a high level signal, transistor 72 is biased into a non-conductive state and current is supplied to the light emitting diode 74 which emits light into the closed optical chamber 13. Obviously, it is possible for more than one functional unit to provide a drive signal at any given time; to avoid garbled, overlapping signals, the machine architecture and programming has to establish certain protocols which assure that only one functional unit provides a responsive signal at a time. The establishment of such protocols, however, is beyond the scope of the present invention.

For maximum flexibility in locating remote functional units, necessary AC or DC voltages could be provided through the cables 50 to the remote functional units using separate electrical conductors from the data/control signal conductors in the cable.

## Claims

1. In a terminal (11) having one or more integrated functional units (32) communicating with each other by means of optical signals propagated through a closed optical chamber (13), a circuit for interfacing one or more remote functional units (46, 48) to said optical chamber (13) wherein each remote functional unit (46, 48) is connected to the terminal unit (11) through a signal carrying cable (50), said circuit including a primary transducer (42) having a single optical detector (54) generating electrical signals representative of the optical energy extant in said optical chamber (13) and a single optical emitter (60) for converting electrical signals representative of the signals from the remote functional units (46, 48) to an optical format suitable for injection into said optical chamber (13), a signal distributing circuit (56, 43; 62, 64, 66) for distributing the electrical signals generated by the detector (54) of the primary transducer (42) to the terminal ends (52) of the signal carrying cables (50) and a signal concentrating circuit (47, 58; 70, 72, 74, 76, 78) for concentrating electrical signals representative of the signals originating from the remote functional units (46, 48) to provide drive signals for the emitter (60) of the primary transducer (42), characterized in that said signal carrying cables (50) are each an optical signal carrying cable and provision is made of a plurality of secondary transducers (45) each optically coupled to the terminal end (52) of one of said optical signal carrying cables (50) and having an optical emitter (43, 66) capable of generating optical signals for injection into the optical signal carrying cables (50) in response to the electrical signals from said signal distributing circuit and an optical detector (47) connected to said concentrating circuit for generating electrical signals representative of optical signals originating from the remote functional units (46, 48).

2. A circuit as claimed in claim 1, wherein said signal distributing circuit comprises signal conducting means connected to said detector (54) of said primary transducer (42) for conducting the electrical signals representative of the optical energy extant in the optical chamber (13) to each of the optical emitters (43, 66) of said secondary transducers (45).

3. A circuit as claimed in claim 1 or 2, wherein the optical emitters (43, 66) of the secondary transducers (45) are connected in series with one another.

4. A circuit as claimed in claim 3, wherein said optical emitters (43, 66) of the secondary transducers (45) and said signal conducting means form a single series signal path.

5. A circuit as claimed in claims 3 to 4, wherein said serially connected optical emitters (43, 66) of said secondary transducers (45) each provides the same signal to the terminal ends (52) of the optical signal carrying cables (50).

6. A circuit as claimed in claims 2 to 5, wherein said signal conducting means includes shunting elements (64), each of said shunting elements (64) being connected in parallel with an optical emitter (66) of the secondary transducers (45) and being able of conducting the signals representative of the optical energy extant in the optical chamber (13) if an open circuit condition occurs at the associated optical emitter (66).

7. A circuit as claimed in claim 6, wherein said shunting elements (64) include a Zener diode.

8. A circuit as claimed in claims 1 to 7, wherein said concentrating means includes a logical OR circuit having inputs receiving electrical signals representative of the optical signals from each of the optical signal carrying cables (50) and a single driving output to the emitter (60) of said primary transducer (42).

9. A circuit as claimed in claims 1 to 7, wherein said concentrating circuit includes a NOR gate (78) having multiple inputs and a single output, a switching means (72) coupled to said single output, a current source (70) coupled to said switching means (72), a current control element (76) connected to said current source (70) and to said switching means (72) and a light emitting diode (74) positioned to be in series with said current source (70) and to be in parallel with said switching means (72) and said current control element (76).

10. A circuit as claimed in claims 1 to 7, wherein said concentrating circuit comprises a NOR gate (78) having multiple inputs and a single output, said multiple inputs receiving electrical signals representative of the optical signals from the remote functional units (46, 48), a switching transistor (72) having a base electrode connected to the single output, an emitter electrode coupled to a reference potential and a collector electrode, a current source (70) coupled to the collector electrode, a means (76) for controlling the direction of current flow coupled between the reference potential and the current source (70) and a light emitting diode (74) disposed in parallel with the means (76) for controlling the direction of current flow and having an input electrode being coupled to the current source (70) and an output electrode being coupled to the reference potential.

## Patentansprüche

1. Interfaceschaltung zwischen einer bzw. mehreren entfernten funktionellen Einheiten (46, 48) und einer optischen Kammer (13) in einem Endgerät (11) mit einer oder mehreren miteinander über optische Signale, welche durch die geschlossene optische Kammer (13) übertragen werden, kommunizierenden integrierten funktionellen Einheiten (32), wobei jede entfernte funktionelle Einheit (46, 48) mit dem Endgerät (11) über ein die Signale leitendes Kabel (50) verbunden ist, wobei die Schaltung einen Hauptsignalgeber (42) aufweist, welcher einen einzelnen optischen Detektor (54) für die Erzeugung elektrischer Signale, die für die in der optischen Kammer (13) noch vorhandene optische Energie repräsentativ sind, sowie einen einzelnen optischen Emitter (60) für die Umwandlung elektrischer Signale, die für die von den entfernten funktionellen Einheiten (46, 48) kommenden Signale repräsentativ sind, in ein optisches Format, das für die Versorgung der optischen Kammer (13) geeignet ist, aufweist, wobei die Schaltung ferner eine Schaltung (56, 43; 62, 64, 66) für die Verteilung der durch den Detektor (54) des Hauptsignalgebers (42) erzeugten elektrischen Signale an die Anschlußenden (52) der die Signale leitenden Kabel (50) aufweist sowie eine die Signale zusammenführende Schaltung (47, 58; 70, 72, 74, 76, 78) für die Zusammenführung der elektrischen Signale, welche für die von den entfernten funktionellen Einheiten (46, 48) kommenden Signale repräsentativ sind, so daß dem Emitter (60) des Hauptsignalgebers (42) Treibersignale zugeführt werden können, dadurch gekennzeichnet, daß die die Signale leitenden Kabel (50) jeweils Kabel zum Weiterleiten optischer Signale sind und daß eine Vielzahl von Sekundärsignalgebern (45) vorhanden ist, welche jeweils optisch an das Anschlußende (52) eines der die optischen Signale leitenden Kabels (50) angeschlossen sind und einen optischen Emitter (43, 66) aufweisen, über den optische Signale für die Versorgung der optischen Signale leitenden Kabel (50) als Reaktion auf die von der die Signale verteilenden Schaltung kommenden Signale erzeugt werden, sowie einen optischen Detektor (47), welcher an die die Signale zusammenführende Schaltung angeschlossen ist, so daß er elektrische Signale erzeugt, welche für die von den entfernten funktionellen Einheiten (46, 48) kommenden optischen Signale repräsentativ sind.

2. Schaltung nach Anspruch 1, dadurch gekennzeichnet, daß die die Signale verteilende Schaltung mit dem Detektor (54) des Hauptsignalgebers (42) verbundene Signalleiter aufweist zum Leiten der elektrischen Signale, welche für die in der optischen Kammer (13) noch vorhandene Energie repräsentativ sind, an jeden der optischen Emitter (43, 66) des Sekundärsignalgebers (45).

3. Schaltung nach Anspruch 1 oder 2, dadurch gekennzeichnet, daß die optischen Emitter (43, 66) des Sekundärsignalgebers (45) miteinander in Reihe geschaltet sind.

4. Schaltung nach Anspruch 3, dadurch gekennzeichnet, daß die optischen Emitter (43, 66) des Sekundärsignalgebers (45) und die Signalleiter einen einzelnen seriellen Signalpfad bilden.

5. Schaltung nach Anspruch 3 und 4, dadurch gekennzeichnet, daß die in Reihe geschalteten optischen Emitter (43, 66) des Sekundärsignalgebers (45) jeweils das gleiche Signal an die Anschlußenden (52) der die optischen Signale leitenden Kabel (50) abgeben.

6. Schaltung nach Anspruch 2 bis 5, dadurch gekennzeichnet, daß die Signalleiter Überbrückungsschaltungen (64) aufweisen, welche jeweils mit einem optischen Emitter (66) des Sekundärsignalgebers (45) parallel geschaltet sind und die Signale, welche für die in der optischen Kammer (13) noch verbliebene optische Energie repräsentativ sind, leiten können, wenn bei dem zugeordneten optischen Emitter (66) ein Leerlaufzustand gegeben ist.

7. Schaltung nach Anspruch 6, dadurch gekennzeichnet, daß die Überbrückungsschaltungen (64) eine Zener-Diode aufweisen.

8. Schaltung nach Anspruch 1 bis 7, dadurch gekennzeichnet, daß die die Signale zusammenführende Schaltung eine logische ODER-Schaltung aufweist, deren Eingänge elektrische Signale empfangen, welche für die von jedem der die optischen Signale leitenden Kabel (50) kommenden optischen Signale repräsentativ sind, sowie einen einzelnen treibenden Ausgang an den Emitter (60) des Hauptsignalgebers (42).

9. Schaltung nach Anspruch 1 bis 7, dadurch gekennzeichnet, daß die die Signale zusammenführende Schaltung eine NOR-Schaltung (78) mit mehreren Eingängen und einem Ausgang aufweist, einen an den Ausgang angeschlossenen Schalter (72), eine an den Schalter (72) angeschlossene Stromquelle (70), einen an die Stromquelle (70) und den Schalter (72) angeschlossenen Stromregler (76), sowie eine lichtaussendende Diode (74), welche so angeordnet ist, daß sie mit der Stromquelle (70) in Reihe und mit dem Schalter (72) und dem Stromregler (76) parallel geschaltet ist.

10. Schaltung nach Anspruch 1 bis 7, dadurch gekennzeichnet, daß die die Signale zusammenführende Schaltung eine NOR-Schaltung (78) mit mehreren Eingängen und einem Ausgang aufweist, wobei die Eingänge elektrische Signale empfangen, welche für die von den entfernten funktionellen Einheiten (46, 48) kommenden optischen Signale repräsentativ sind, einen Schalttransistor (72), dessen Basiselektrode an den Ausgang der NOR-Schaltung angeschlossen ist, eine Emitterelektrode, die an eine Bezugsspannung und eine Kollektorelektrode gekoppelt ist, eine an die Kollektorelektrode gekoppelte Stromquelle (70), eine Einrichtung (76) zur Stromrichtungssteuerung, welche zwischen die Bezugsspannung und die Stromquelle gekoppelt ist und eine lichtaussendende Diode (74), welche mit der Einrichtung (76) für die Stromrichtungssteuerung parallel geschaltet ist und eine an die Stromquelle (70) angeschlossene Eingangselektrode sowie eine an die Bezugsspannung angeschlossene Ausgangselektrode aufweist.

**Revendications**

1. Dans un terminal (11) ayant une ou plusieurs unités fonctionnelles (32) intégrées qui communiquent les unes avec les autres à l'aide de signaux optiques se propageant à travers une chambre optique (13) fermée, un circuit pour relier une ou plusieurs unités fonctionnelles éloignées (46, 48) à la chambre optique (13) dans lequel chaque unité fonctionnelle éloignée (46, 48) est reliée au terminal (11) via un câble (50) porteur de signaux, ledit circuit comprenant un transducteur primaire (42) qui a un seul détecteur (54) optique produisant des signaux électriques représentatifs de l'énergie optique pénétrant dans la chambre optique (13) et un seul émetteur (60) optique pour convertir des signaux électriques représentatifs des signaux provenant des unités fonctionnelles éloignées (46, 48) dans un format optique qui convient pour leur injection dans la chambre optique (13), un circuit (56, 43; 62, 64, 66) de distribution de signaux pour distribuer aux extrémités terminales (52) des câbles (50) porteurs de signaux les signaux électriques produits par le détecteur (54) du transducteur primaire (42) et un circuit (47, 58; 70, 72, 74, 76, 78) de concentration de signaux pour concentrer des signaux électriques représentatifs des signaux provenant des unités fonctionnelles éloignées (46, 48) afin de fournir des signaux d'excitation pour l'émetteur (60) du transducteur primaire (42), caractérisé en ce que chacun des câbles (50) porteurs de signaux est un câble porteur de signaux optiques et en ce qu'il est prévu une pluralité de transducteurs secondaires (45) couplés optiquement chacun à l'extrémité terminale (52) d'un des câbles (50) porteurs de signaux optiques et ayant un émetteur optique (43, 66) capable de produire des signaux optiques à injecter dans les câbles (50) porteurs de signaux optiques en réponse aux signaux électriques venant dudit circuit de distribution de signaux et un détecteur optique (47) relié audit circuit de concentration pour produire des signaux électriques représentatifs de signaux optiques provenant des unités fonctionnelles éloignées (46, 48).

2. Circuit selon la revendication 1, dans lequel ledit circuit de distribution de signaux comprend un moyen conducteur de signaux relié au détecteur (54) du transducteur primaire (42) pour conduire jusqu'à chacun des émetteurs optiques (43, 46) des transducteurs secondaires (45) les signaux électriques représentatifs de l'énergie optique pénétrant dans la chambre optique (13).

3. Circuit selon la revendication 1 ou 2, dans lequel les émetteurs optiques (43, 66) des transducteurs secondaires (45) sont montés en série les uns avec les autres.

4. Circuit selon la revendication 3, dans lequel les émetteurs optiques (43, 66) des transducteurs secondaires (45) et le moyen conducteur de signaux forment un seul parcours de signaux en série.

5. Circuit selon les revendications 3 à 4, dans lequel les émetteurs optiques (43, 46) montés en série des transducteurs secondaires (45) fournissent chacun le même signal aux extrémités terminales (52) des câbles (50) porteurs de signaux optiques.

6. Circuit selon les revendications 2 à 5, dans lequel le moyen conducteur de signaux comprend des éléments de dérivation (64), chacun desdits éléments de dérivation (64) étant monté en parallèle avec un émetteur optique (66) des transducteurs secondaires (45) et étant capable de conduire les signaux représentatifs de l'énergie optique entrant dans la chambre optique (13) si un état de circuit ouvert survient à l'émetteur optique (66) correspondant.

7. Circuit selon la revendication 6, dans lequel les éléments de dérivation (64) comprennent une diode Zener.

8. Circuit selon les revendications 1 à 7, dans lequel ledit moyen de concentration comprend un circuit logique OU qui a des entrées recevant des signaux électriques représentatifs des signaux optiques venant de chacun des câbles (50) porteurs de signaux optiques et une seule sortie d'excitation pour l'émetteur (60) du transducteur primaire (42).

9. Circuit selon les revendications 1 à 7, dans lequel ledit circuit de concentration comprend un circuit NON-OU (78) ayant plusieurs entrées et une sortie unique, un moyen de commutation (72) couplé à ladite sortie unique, une source (70) de courant couplée au moyen de commutation (72), un élément (76) de commande de courant relié à la source (70) de courant et au moyen de commutation (72) et une diode luminescente (74) disposée pour être en série avec la source (70) de courant et pour être en parallèle avec le moyen de commutation (72) et l'élément (76) de commande de courant.

10. Circuit selon les revendications 1 à 7, dans lequel le circuit de concentration comporte un circuit NON-OU (78) ayant plusieurs entrées et une sortie unique, lesdites entrées multiples recevant des signaux électriques représentatifs des signaux optiques venant des unités fonctionnelles éloignées (46, 48), un transistor de commutation (72) ayant une électrode de base reliée à la sortie unique, une électrode d'émetteur couplée à un potentiel de référence et une électrode de collecteur, une source (70) de courant couplée à l'électrode de collecteur, un moyen (76) pour commander le sens de passage du courant couplé entre le potentiel de référence et la source (70) de courant et une diode luminescente (74) disposée en parallèle avec le moyen (76) pour commander le sens de passage du courant et ayant une électrode d'entrée couplée à la source (70) de courant et une électrode de sortie couplée au potentiel de référence.

FIG. 1

FIG. 2

FIG. 3

FIG. 4

FIG. 5